# EUROPÄISCHE PATENTSCHRIFT

(11) **EP 3 606 698 B1**
(45) Veröffentlichungstag und Bekanntmachung des Hinweises auf die Patenterteilung: **24.04.2024**
(21) Anmeldenummer: 18713608.0
(22) Anmeldetag: 21.03.2018
(51) Int. Cl.: B23K 26/322, B23K 26/21, B23K 26/0622, B23K 26/244, B23K 26/22, B23K 26/062, B23K 101/00, B23K 101/34

(54) **VERFAHREN ZUM VERSCHWEISSEN VON BAUTEILEN**
METHOD FOR WELDING COMPONENTS
PROCÉDÉ DE SOUDAGE DE PIÈCES

(30) Priorität: 04.04.2017 DE 102017205765
(43) Veröffentlichungstag der Anmeldung: 12.02.2020
(73) Patentinhaber: Bayerische Motoren Werke Aktiengesellschaft, 80809 München (DE)
(72) Erfinder: GRIMM, Alexander, 85757 Karlsfeld (DE); HAMMER, Maik, 84079 Bruckberg (DE); NIEKERK, Johann, 80805 München (DE)
(86) Internationale Anmeldenummer: PCT/EP2018/057097
(87) Internationale Veröffentlichungsnummer: WO 2018/184835

(56) Entgegenhaltungen:
- EP-A1- 0 486 817
- DE-A1-102015 004 496
- JP-A- 2010 023 082
- US-B1- 6 646 225

## Beschreibung

Die vorliegende Erfindung betrifft ein Verfahren zum Verschweißen von Bauteilen gemäß dem Oberbegriff des Patentanspruches 1.

Ein derartiges Verfahren ist aus der US 6 646 225 B1 bekannt. Zum technischen Hintergrund der Erfindung zählen die
- ältere, nicht vorveröffentlichte deutsche Patentanmeldung DE 10 2016 206 012.0, in der das Verschweißen zweier Fahrzeugkarosseriebauteile mittels eines gepulsten Laserstrahls beschrieben ist,
- die DE 10 2015 004496 A1,
- JP 2010 023 082 A sowie
- die EP 486 817 A1.

Das Verschweißen von Blechbauteilen mittels eines Laserstrahls ist bereits seit langem bekannt. Dabei wird ein Laserstrahl üblicherweise mit einer kontinuierlichen Vorschubbewegung relativ zu den beiden miteinander zu verschweißenden Bauteilen verfahren, was zum Aufschmelzen und Verschmelzen der Materialen der beiden Bauteile führt. Der Laserstrahl "zieht" aufgrund seiner Vorschubbewegung eine "Schmelzschleppe" von mehreren Millimetern (z. B. 10mm) hinter sich her, d. h. in einem Bereich von mehreren Millimetern hinter der aktuellen Position des Laserstrahls ist das Material noch flüssig.

Besonders problematisch ist das Verschweißen verzinkter Stahlbleche. Die Zinkschicht verdampft nämlich bereits bei circa 960° Celsius und entweicht dann dampfförmig in die Umgebung bzw. lagert sich in das darunter befindliche aufgeschmolzene Metallmaterial ein, was zur Porositäten führen kann. Bei aneinander anliegenden, zu verschweißenden Blechen kann verdampfendes Zink aus dem Anlagebereich der Bleche heraus nicht ohne weiteres in die Umgebung entweichen, was zur Einlagerung größerer Zinkmengen in dem aufgeschmolzenen Metall und in der Folge zu unerwünscht starken Porositäten, Löchern bzw. ggf. zu Auswürfen und Spritzern führen kann.

Laserstrahlschweißen kam daher bislang aus Qualitätsgründen nur in "trockenen Bereichen" zum Einsatz aber nicht bei Bauteilen bzw. in Bauteilbereichen, die in hohem Maße Feuchtigkeit bzw. Spritzwasser ausgesetzt sind, da hier das Korrosionsrisiko bislang als zu hoch angesehen wurde.

Aufgabe der Erfindung ist es, ein Laserschweißverfahren anzugeben, das zu qualitativ hochwertigen Schweißverbindungen führt und das auch für einen Einsatz im Fahrzeugkarosseriebau geeignet ist.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Ausgangspunkt der Erfindung ist ein Verfahren zum Verschweißen eines ersten Bauteils und eines zweiten Bauteils. Die bereitgestellten Bauteile werden zunächst aneinandergesetzt und anschließend mittels eines Laserstrahls miteinander verschweißt. Das Verschweißen erfolgt gepulst, d. h. der Laserstrahl wird wiederholt ein- und ausgeschaltet, wodurch eine Vielzahl von Schweißimpulsen erzeugt werden. Die einzelnen Schweißimpulse sind jeweils durch schweißfreie Pausenintervalle, in denen der Laserstrahl ausgeschaltet ist, unterbrochen. Gemäß der Erfindung wird in dem ersten Bauteil ein das erste Bauteil durchsetzender Schlitz hergestellt. Der Laserstrahl wird während des Verschweißens in den Bereich des Schlitzes gerichtet. Der Schlitz kann gerade oder gekrümmt sein. Der Verlauf des Schlitzes entspricht dem Verlauf der herzustellenden Schweißnaht.

Vorzugsweise wird der Schlitz vor dem Verbinden bzw. vor dem Aneinanderbringen der beiden Bauteil hergestellt. Das Herstellen des Schlitzes kann z.B. durch Laserschneiden erfolgen.

Die Breite des Schlitzes kann in Abhängigkeit vom Material des ersten Bauteils (d.h. in Abhängigkeit von dessen Werkstoff und Dicke) von sehr schlank (z.B. wenige Zehntel Millimeter bis mehrere Millimeter) gewählt werden. Die Breite des Schlitzes muss nicht notwendigerweise über die Länge des Schlitzes konstant sein, sondern kann auch über die Länge des Schlitzes variieren.

Vorzugsweise wird so geschweißt, dass die Schweißnaht an den beiden gegenüberliegenden, voneinander beabstandeten "Wänden" des Schlitzes anbindet. Vorzugsweise ist die Breite des Schlitzes kleiner als die Breites des "Schweißbades" bzw. die Breite der entstehenden Schweißnaht, so dass der Schlitz komplett zugeschweißt wird und das seitliche Material des ersten Bauteils mit dem Material des zweiten Bauteils verschmolzen wird und sich verbindet. Durch die Schlitzung wird auch beim gepulsten Schweißen ein gleichmäßiges Aufschmelzen der beiden Bauteile bei einer Überlappverbindung mit vergleichsweise geringem Energieeintrag ermöglicht.

Gemäß der Erfindung wird durch jeden Schweißimpuls ein lokales Schweißareal erzeugt, in dem Material der beiden Bauteile lokal begrenzt aufgeschmolzen und verschmolzen wird. Unter dem Begriff "Schweißareal" ist ein relativ kleiner, z.B. "punktförmiger" oder kreisflächenartiger Bereich zu verstehen, wobei selbstverständlich auch andere Geometrien denkbar sind. Ein solches Schweißareal kann größenordnungsmäßig z.B. in einem

(Durchmesser-)bereich zwischen wenigen Mikrometern und wenigen Millimetern liegen (z.B. bis zu 3 oder 4 oder 5 mm).

Ein wesentlicher Gedanke der Erfindung besteht darin, dass sich einzelne der durch die Schweißimpulse erzeugten Schweißareale überlappen. Auf diese Weise kann aus einer Vielzahl sich überlappender Schweißareale eine zusammenhängende Schweißnaht aufgebaut werden.

Im Unterschied zu herkömmlichen Laserschweißverfahren, bei denen der Laserstrahl mit einer gewissen Vorschubgeschwindigkeit relativ zu den zu verschweißenden Bauteilen bewegt wird, ist gemäß der Erfindung vorgesehen, dass der Laserstrahl während der einzelnen Schweißimpulse relativ zu den beiden Bauteilen unbewegt bleibt. Ein aktuell erzeugtes Schweißareal wird während des Schweißimpulses permanent, insbesondere permanent vollständig bzw. vollflächig, mit Laserlicht bestrahlt. Wenn während des Schweißens keine Relativbewegung des Laserstrahls in Bezug auf die Bauteile stattfindet, kommt es im Unterschied zum Stand der Technik auch nicht zu einem Nachziehen einer Schweißschleppe.

Aufgrund des gepulsten Energieeintrags erfolgt das Aufschmelzen des Materials der miteinander zu verschweißenden Bauteile extrem fokusiert und lokal äußerst begrenzt. Das Material wird also im Wesentlichen nur in dem aktuell vom Laserstrahl aufgeschmolzenen Bereich signifikant erwärmt. Bereits im Abstand von einigen wenigen Millimetern von dem aktuellen Schweißareal kommt es kaum zu einer Temperaturerhöhung. Dies hat den Vorteil, dass Bauteile, bei denen sich temperatursensitive Komponenten, wie z. B. ein Kunststoffbauteil oder eine Kleberschicht o. ä. relativ nahe an dem aktuell erzeugten Schweißareal befinden, dennoch problemlos miteinander verschweißt werden können.

Wie bereits erwähnt, kann vorgesehen sein, dass einzelne der durch die Schweißimpulse erzeugten Schweißareale sich zu einer zusammenhängenden, fluiddichten Schweißnaht überlappen. Gemäß der Erfindung kann vorgesehen sein, dass der Laserstrahl so positioniert wird, dass sich ein aktuell erzeugtes Schweißareal mit einem bereits erzeugten bzw. geschweißten Schweißareal schuppenartig oder nahtartig überlappt.

Erfindungsgemäß wird ein aktuell erzeugtes, sich mit einem bereits erzeugten Schweißareal überlappendes Schweißareal erst dann erzeugt bzw. aufgeschmolzen, wenn das bereits erzeugte Schweißareal, das von dem zu erzeugenden Schweißareal teilweise überlappt werden soll, bereits wieder erstarrt oder weitgehend erstarrt ist.

Es kann vorgesehen sein, dass Schweißareale sequentiell nacheinander erzeugt werden und zwar in einer Reihenfolge, sodass sich die unmittelbar nacheinander erzeugten Schweißareale schuppenartig überlappen. Anders ausgedrückt bedeutet dies, dass ein aktuell erzeugtes Schweißareal sich mit einem Schweißareal überlappt, das unmittelbar vor dem letzten Pausenintervall erzeugt wurde. Bei diesem Verfahren werden also Schweißareale ähnlich wie einer Perlenkette sequenziell nacheinander erzeugt.

Alternativ dazu ist es auch möglich, dass ein aktuell erzeugtes Schweißareal einen Abstand von einem Schweißareal hat, das unmittelbar vor dem letzten Pausenintervall erzeugt wurde. Das aktuell erzeugte Schweißareal ist somit überlappungsfrei in Bezug auf das unmittelbar vor dem letzten Pausenintervall erzeugte Schweißareal. Dadurch kann der lokale Wärmeeintrag bzw. der lokale Temperaturanstieg in den miteinander zu verschweißenden Bauteilen noch weiter minimiert werden. Dennoch kann auch auf diese Weise eine zusammenhängende fluiddichte Schweißnaht erzeugt werden, im Unterschied zu dem oben beschriebenen Verfahren werden die einzelnen Schweißareale der Schweißnaht nicht eines an das vorgehende gesetzt, sondern in einer anderen Reihenfolge.

Die Impulsdauern der Vielzahl von Schweißimpulsen können z. B. in einem Bereich zwischen 0,1ms und 100ms liegen, oder in einem Bereich zwischen 0,1ms und 50ms bzw. in einem Bereich zwischen 0,1ms und 20ms. Vorzugsweise liegen die Impulsdauern der Vielzahl von Schweißimpulsen in einem Bereich zwischen 1,0ms und 20ms bzw. 1,0 ms und 10 ms. Mit derartigen Impulsdauern ist bei vergleichsweise geringem Gesamtwärmeeintrag in das Bauteil ein sehr lokales Aufschmelzen möglich.

Die Impulsdauern der Vielzahl von Schweißimpulsen können jeweils gleich lang sein. Dies muss aber nicht so sein. Die Impulsdauern der Vielzahl von Schweißimpulsen können auch unterschiedlich lang sein. Beispielsweise kann es sinnvoll sein, in Bereichen, in denen die miteinander zu verschweißenden Bauteile eine größere Bauteildicke aufweisen, mit einer längeren Schweißimpulsdauer zu arbeiten als in Bauteilbereichen, in denen die Bauteildicken geringer sind.

Die Leistungsdichte des für die Erfindung verwendeten Laserstrahls kann beispielsweise im Bereich zwischen 10⁴ Watt/cm² und 10¹⁰ Watt/cm² liegen. Dabei kann vorgesehen sein, dass die Leistungsdichte der Vielzahl von Schweißimpulsen gleich oder unterschiedlich groß ist. Analog zur Länge der Impulsdauern kann beispielsweise vorgesehen sein, dass "Schweißpunkte" in Bereichen, in denen die miteinander zu verschweißenden Bauteile eine größere Bauteildicke aufweisen, größer ist, als in anderen Bereichen.

Ferner kann vorgesehen sein, dass während eines Schweißimpulses die Leistungsdichte des Schweißimpulses verändert wird, z.B. durch
- Änderung der Laserleistung bei konstant gehaltenem Strahlquerschnitt oder
- Änderung der Strahlquerschnitts bei konstant gehaltener Laserleistung oder
- Änderung der Laserleistung und des Strahlquerschnitts.

Nach einer Weiterbildung der Erfindung wird ein Laserstrahl verwendet, der einen Strahldurchmesser oder eine Strahlbreite aufweist, die im Bereich zwischen 40µm und 4mm liegt. Auch bei diesem Parameter kann vorgesehen sein, dass der Strahldurchmesser oder die Strahlbreite des Laserstrahls bei der Vielzahl von Schweißimpulsen gleich oder unterschiedlich ist. Je nach Anwendung kann es erwünscht sein, eine Schweißnaht zu erzeugen, die über ihre gesamte Länge eine im Wesentlichen gleiche Schweißnahtbreite oder eine unterschiedliche Schweißnahtbreite aufweist, was durch Variieren des Strahldurchmessers bzw. der Strahlbreite des Laserstrahls eingestellt werden kann.

Hinsichtlich des Querschnitts des Laserstrahls kann z. B. mit einem Laserstrahl gearbeitet werden, der einen kreisförmigen Strahlquerschnitt aufweist. Dies muss aber nicht zwingend der Fall sein. Prinzipiell denkbar sind auch andere Querschnittsformen, wie z. B. ein Laserstrahl mit einem rechteckigen oder ovalen Strahlquerschnitt.

Versuche haben ergeben, dass sich qualitativ sehr gute Schweißverbindungen erzielen lassen, wenn mit einer "Repetitionsrate" gearbeitet wird, die in einem Bereich zwischen 200Hz und 10kHz liegt. Unter der "Repetitionsrate" wird die Anzahl der Schweißimpulse pro Sekunde verstanden. Wenn beispielsweise mit Schweißimpulsen der Länge 5ms und einem Pausenintervall von 15ms gearbeitet wird, ergibt dies eine Periodendauer T von 20ms was einer Repetitionsrate von 1/0,02s bzw. 50Hz entspricht.

Mit dem erfindungsgemäßen Verfahren können Metallbauteile, insbesondere Metallblechbauteile, wie sie z.B. im Fahrzeugkarosseriebau zum Einsatz kommen, miteinander verschweißt werden. Das erfindungsgemäße Verfahren ist aber nicht auf Metallbauteile beschränkt, sondern es kann prinzipiell auch zum Verschweißen von Kunststoffbauteilen, insbesondere von Bauteilen aus thermoplastischem Kunststoff eingesetzt werden.

Das erfindungsgemäße Verfahren ist auch gut zum Verschweißen von Bauteilen geeignet, bei denen mindestens eines der Bauteile teilweise oder vollständig mit einer Beschichtung überzogen ist, wie dies beispielsweise bei verzinkten Stahlblechen der Fall ist. Vorzugsweise wird hierfür ein Bauteil mit einer Beschichtung verwendet, deren Schmelz- oder Verdampfungstemperatur niedriger als die Schmelz- oder Verdampfungstemperatur des Bauteilmaterials ist, auf das die Beschichtung aufgebracht ist. Dies ist beispielsweise bei verzinkten Stahlblechen der Fall, bei denen die Zinkschicht bereits bei Temperaturen von circa 960° Celsius verdampft.

Das erfindungsgemäße Verfahren ist nicht nur zum Verschweißen herkömmlicher Stahl- oder Aluminiumbleche, sondern insbesondere auch zum Verschweißen von Edelstahlblechbauteilen geeignet. Alternativ dazu kann das erfindungsgemäße Verfahren auch eingesetzt werden, um ein Stahl- oder Aluminiumbauteil mit einem Gussbauteil zu verschweißen. Beispielsweise kann eine Stahl- oder Aluminiumbuchse oder ein Stahl- oder Aluminiumbolzen an ein Gussbauteil angeschweißt oder in eine Ausnehmung eines Gussbauteils mit dem erfindungsgemäßen Verfahren eingeschweißt werden. Wen in der Beschreibung von "Aluminium" die Rede ist, sind davon auch "Aluminiumlegierungen" umfasst.

Das erfindungsgemäße Verfahren ist insbesondere zum Verschweißen von Bauteilen geeignet, deren Dicke im Schweißbereich zwischen 0,3mm und 5mm, insbesondere in einem Bereich zwischen 0,3mm und 3mm liegt.

Im Folgenden wird die Erfindung im Zusammenhang mit der Zeichnung näher erläutert. Es zeigen:
- Figur 1: das Verschweißen zweier Blechbauteile in schematischer Darstellung;
- Figur 2: das sequentielle Erzeugen einer Schweißnaht aus einer Vielzahl von Schweißarealen;
- Figur 3: ein Diagramm, welches die Laserleistung über der Zeit beschreibt und

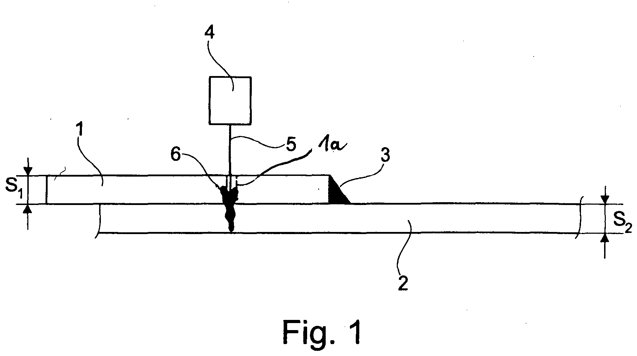

Figur 1 zeigt zwei aneinander anliegende Bleche 1, 2, wobei die Dicke des Blechs 1 s₁ und die Dicke des Blechs 2 s₂ beträgt. s₁ bzw. s₂ können z. B. im Bereich zwischen 0,3mm und 3mm liegen. Im Randbereich des Blechs 1 wurden die beiden Bleche 1, 2 hier bereits durch eine Kehlnaht 3 miteinander verschweißt. Ein vorheriges Verschweißen durch die Kehlnaht 3 ist aber nicht unbedingt erforderlich.

In dem ersten Blech 1 ist ein das erste Bauteil 1 durchsetzender Schlitz 1a vorgesehen. Der Schlitz 1a kann eine Breite von wenigen Zehntel Millimetern bis zu einigen Millimetern haben.

Mittels einer Laserschweißeinrichtung 4, welche einen Laserstrahl 5 erzeugt, werden die beiden Bleche 1, 2 zusätzlich durch eine (Stumpf-)naht 6 miteinander verschweißt. Dabei wird der Laserstrahl 5 so gerichtet, dass er in den Schlitz 1a eindringt und Material der beiden Bauteile 1, 2 aufschmilzt und miteinander verschweißt.

Die Laserschweißeinrichtung 4 wird dabei gepulst betrieben, d. h. durch periodisches Ein- und Ausschalten des Laserstrahls 5 werden nacheinander eine Vielzahl von Schweißimpulsen erzeugt, die jeweils durch schweißfreie Pausenintervalle unterbrochen sind.

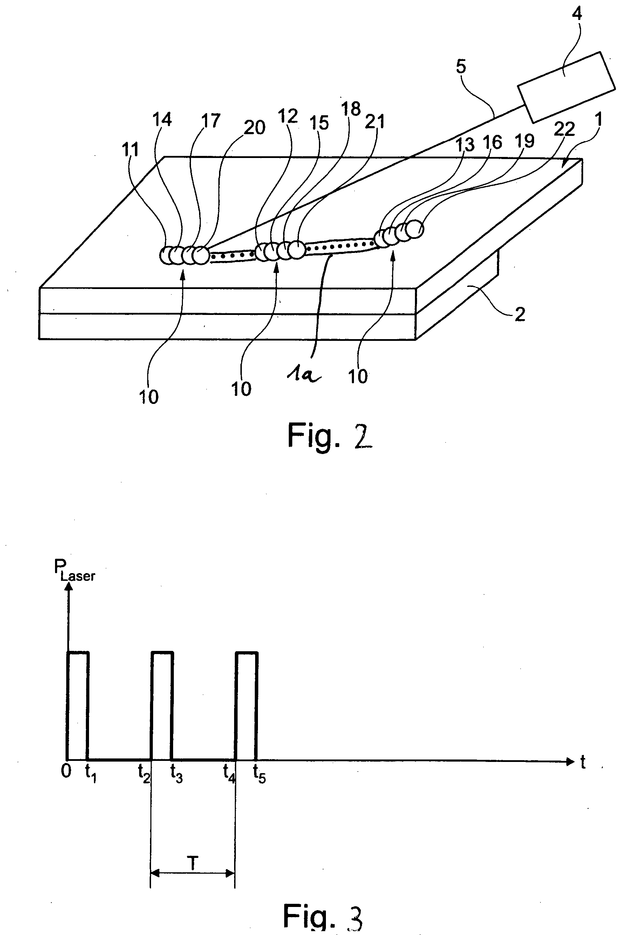

Figur 2 zeigt zwei aufeinanderliegende Bleche 1, 2, die durch eine gerade im Entstehen befindliche Schweißnaht 10 miteinander verbunden werden. Deutlich zu erkennen ist der in dem ersten Bauteil 1 vorgesehene Schlitz 1a.

Die Schweißnaht 10 wird dabei durch einzelne sich schuppenartig überlappende Schweißareale sequentiell aufgebaut. Um den von dem Laserstrahl 5 erzeugten Wärmeeintrag in die Bleche 1, 2 soweit wie möglich lokal zu begrenzen, kann vorgesehen sein, dass die einzelnen Schweißarme nicht alle nebeneinander bzw. aufeinander folgend erzeugt werden. Beispielsweise kann vorgesehen sein, dass die Schweißareale in der durch die Bezugszeichen 11 - 22 angegebenen Reihenfolge nacheinander erzeugt werden. Nach dem Erzeugen des Schweißareals 11 kann dieses abkühlen. Das im Anschluss an das Schweißareal 11 erzeugte Schweißareal 12 weist einen hinreichend großen Abstand von dem Schweißareal 11 auf, so dass der Wärmeeintrag in das Schweißareal 12 das Abkühlen des Schweißareals 11 im Wesentlichen unbeeinflusst lässt, usw.

Figur 3 beschreibt das erfindungsgemäße gepulste Schweißen anhand eines Diagramms, in dem über der Zeit t die Laserleistung P_{Laser} aufgetragen ist. Ein erster Schweißimpuls erstreckt sich vom Zeitpunkt 0 bis zum Zeitpunkt t₁. Hieran schließt sich ein Pausenintervall der Länge [t₁, t₂] an.

Hierauf erfolgt ein weiterer Schweißimpuls der Länge [t₂, t₃], woran sich wieder ein Pausenintervall der Länge [t₃, t₄] anschließt. Die Periodendauer, d. h. die Länge eines Schweißimpulses und eine sich daran anschließenden Pausenintervalls beträgt somit T= [t₂, t₄].

## Patentansprüche

1. Verfahren zum Verschweißen von Bauteilen (1, 2) mit folgenden Schritten:
• Bereitstellen eines ersten Bauteils (1) und eines zweiten Bauteils (2),
• Aneinandersetzen der beiden Bauteile (1, 2),
• Verschweißen der beiden Bauteile (1, 2) mittels eines Laserstrahls (5), wobei
• in dem ersten Bauteil ein das erste Bauteil (1) durchsetzender Schlitz hergestellt wird,
der Laserstrahl (5) während des Verschweißens in den Bereich des Schlitzes gerichtet ist,
**dadurch gekennzeichnet, dass**
• es sich bei mindestens einem der beiden Bauteile (1, 2) um ein Karosseriebauteil einer herzustellenden Fahrzeugkarosserie, handelt,
• durch wiederholtes Ein- und Ausschalten des Laserstrahls (5) eine Vielzahl von Schweißimpulsen erzeugt werden, die jeweils durch schweißfreie Pausenintervalle, in denen der Laserstrahl (5) ausgeschaltet ist, unterbrochen werden,
• durch jeden Schweißimpuls ein lokales Schweißareal (11 - 22) erzeugt wird, in dem Material der beiden Bauteile (1, 2) lokal begrenzt aufgeschmolzen und verschmolzen wird, wobei
• sich einzelne der durch die Schweißimpulse erzeugten Schweißareale (11 - 22) überlappen, wobei
• der Laserstrahl während der einzelnen Schweißimpulse relativ zu den Bauteilen (1, 2) unbewegt bleibt, so dass während eines Schweißimpulses das jeweilige Schweißareal (11 - 22) permanent mit Laserlicht bestrahlt wird, und wobei
• ein aktuell erzeugtes, sich mit einem bereits erzeugten Schweißareal (17) überlappendes Schweißareal (20) erst dann erzeugt wird, wenn das bereits erzeugte Schweißareal (17) bereits erstarrt oder weitgehend erstarrt ist.

2. Verfahren nach Anspruch 1, **dadurch gekennzeichnet, dass** sich einzelne der durch die Schweißimpulse erzeugten Schweißareale (11 - 22) zu einer zusammenhängenden, fluiddichten Schweißnaht (10) überlappen.

3. Verfahren nach einem der Ansprüche 1 oder 2, **dadurch gekennzeichnet, dass** der Laserstrahl (5) so positioniert wird, dass sich ein aktuell erzeugtes Schweißareal (20) mit einem bereits geschweißten Schweißareal (17) überlappt, insbesondere schuppenartig oder nahtartig.

4. Verfahren nach einem der Ansprüche 1 bis 3, **dadurch gekennzeichnet, dass** ein aktuell erzeugtes Schweißareal (20) sich mit einem Schweißareal überlappt, das unmittelbar vor dem letzten Pausenintervall erzeugt wurde.

5. Verfahren nach einem der Ansprüche 1 bis 3, **dadurch gekennzeichnet, dass** ein aktuell erzeugtes Schweißareal (20) einen Abstand von einem Schweißareal (19) hat, das unmittelbar vor dem letzten Pausenintervall erzeugt wurde und somit überlappungsfrei in Bezug auf das unmittelbar vor dem letzten Pausenintervall erzeugte Schweißareal (19) ist.

6. Verfahren nach einem der Ansprüche 1 bis 5, **dadurch gekennzeichnet, dass** die Impulsdauern der Vielzahl von Schweißimpulsen im Bereich zwischen
• 0,1ms bis 100ms oder
• 0,1ms bis 50ms oder
• 0,1 ms bis 20ms oder
• 1ms bis 20ms oder
• 1ms bis 10ms
liegen.

7. Verfahren nach einem der Ansprüche 1 bis 6, **dadurch gekennzeichnet, dass** die Impulsdauern der Vielzahl von Schweißimpulsen gleich lang sind.

8. Verfahren nach einem der Ansprüche 1 bis 6, **dadurch gekennzeichnet, dass** die Impulsdauern der Vielzahl von Schweißimpulsen unterschiedlich lang sind.

9. Verfahren nach einem der Ansprüche 1 bis 8, **dadurch gekennzeichnet, dass** die Leistungsdichte des Laserstrahls im Bereich zwischen 10⁴ Watt/cm² und 10¹⁰ Watt/cm² liegt.

10. Verfahren nach einem der Ansprüche 1 bis 9, **dadurch gekennzeichnet, dass** die Leistungsdichte der Vielzahl von Schweißimpulsen gleich groß ist.

11. Verfahren nach einem der Ansprüche 1 bis 9, **dadurch gekennzeichnet, dass** die Leistungsdichte der Vielzahl von Schweißimpulsen unterschiedlich groß ist.

12. Verfahren nach einem der Ansprüche 1 bis 11, **dadurch gekennzeichnet, dass** der Laserstrahl einen Strahldurchmesser oder eine Strahlbreite aufweist, die im Bereich zwischen 40µm und 4mm liegt.

13. Verfahren nach einem der Ansprüche 1 bis 12, **dadurch gekennzeichnet, dass** der Strahldurchmesser oder die Strahlbreite des Laserstrahls (5) bei der Vielzahl von Schweißimpulsen jeweils gleich ist.

14. Verfahren nach einem der Ansprüche 1 bis 13, **dadurch gekennzeichnet, dass** mit einem Laserstrahl (5) gearbeitet wird, der einen kreisförmigen Strahlquerschnitt aufweist.

15. Verfahren nach einem der Ansprüche 1 bis 14, **dadurch gekennzeichnet, dass** der Strahldurchmesser oder die Strahlbreite des Laserstrahls (5) bei einzelnen Schweißimpulsen der Vielzahl von Schweißimpulsen unterschiedlich ist.

16. Verfahren nach einem der Ansprüche 1 bis 15, **dadurch gekennzeichnet, dass** mit einer Repetitionsrate in einem Bereich zwischen 200 Hz und 10 kHz geschweißt wird.

17. Verfahren nach einem der Ansprüche 1 bis 16, **dadurch gekennzeichnet, dass** als Bauteile Metallbauteile, insbesondere Metallblechbauteile, verwendet werden.

18. Verfahren nach einem der Ansprüche 1 bis 16, **dadurch gekennzeichnet, dass** als Bauteile Kunststoffbauteile, insbesondere Bauteile aus thermoplastischem Kunststoff, verwendet werden.

19. Verfahren nach einem der Ansprüche 1 bis 18, **dadurch gekennzeichnet, dass** mindestens eines der Bauteile ein Bauteil ist, das teilweise oder vollständig mit einer Beschichtung überzogen ist.

20. Verfahren nach Anspruch 19, **dadurch gekennzeichnet, dass** ein Bauteil mit einer Beschichtung verwendet wird, deren Schmelz- oder Verdampfungstemperatur niedriger als die Schmelz- oder Verdampfungstemperatur des Bauteilmaterials ist, auf das die Beschichtung aufgebracht ist.

21. Verfahren nach einem der vorangehenden Ansprüche, **dadurch gekennzeichnet, dass** als mindestens eines der Bauteile ein Stahlblechbauteil, insbesondere ein Edelstahlblechbauteil, oder ein Aluminiumbauteil oder ein Bauteil aus einer Aluminiumlegierung verwendet wird.

22. Verfahren nach einem der vorangehenden Ansprüche, **dadurch gekennzeichnet, dass** als mindestens eines der Bauteile ein verzinktes Bauteil verwendet wird.

23. Verfahren nach einem der vorangehenden Ansprüche, **dadurch gekennzeichnet, dass** das erste Bauteil ein Gussbauteil und das zweite Bauteil ein Bauteil aus einem anderen Material, insbesondere Stahl oder Aluminium ist, welches an das Gussbauteil angeschweißt oder in das Gussbauteil eingeschweißt wird.

24. Verfahren nach einem der vorangehenden Ansprüche, **dadurch gekennzeichnet, dass** die Dicke (s₁) des ersten Bauteils (1) und/oder die Dicke (s₂) des zweiten Bauteils (2) in einem Bereich zwischen 0,3mm bis 5mm, insbesondere in einem Bereich zwischen 0,3mm bis 3mm, liegt.

25. Verfahren nach einem der Ansprüche 1 bis 24, **dadurch gekennzeichnet, dass** während eines Schweißimpulses die Leistungsdichte des Schweißimpulses verändert wird durch
• Änderung der Laserleistung bei konstant gehaltenem Strahlquerschnitt oder
• Änderung der Strahlquerschnitts bei konstant gehaltener Laserleistung oder
• Änderung der Laserleistung und des Strahlquerschnitts.

## Claims

1. Method for welding components (1, 2) together, comprising the following steps:
• providing a first component (1) and a second component (2),
• placing the two components (1, 2) side by side,
• welding the two components (1, 2) together by means of a laser beam (5), wherein
• in the first component, a slit extending through the first component (1) is produced,
the laser beam (5) is directed into the region of the slit during welding,
**characterized in that**
• at least one of the two components (1, 2) is a body component of a vehicle body to be produced,
• by repeatedly switching the laser beam (5) on and off, a multiplicity of welding pulses, which are interrupted in each case by weld-free pause intervals in which the laser beam (5) is switched off, are generated,
• a local weld area (11-22) is produced by each welding pulse, in which material of the two components (1, 2) is melted in a locally delimited manner and fused, wherein
• individual ones of the weld areas (11-22) which are produced by the welding pulses overlap one another, wherein
• the laser beam remains stationary relative to the components (1, 2) during the individual welding pulses, as a result of which the respective weld area (11-22) is permanently exposed to laser light during a welding pulse, and wherein
• a weld area (20) which is currently being produced and overlaps with a weld area (17) which has already been produced is produced only when the weld area (17) that has already been produced has already solidified or substantially solidified.

2. Method according to Claim 1, **characterized in that** individual ones of the weld areas (11-22) which are produced by the welding pulses overlap one another to form a contiguous, fluid-tight weld seam (10).

3. Method according to either of Claims 1 and 2, **characterized in that** the laser beam (5) is positioned such that a weld area (20) that is currently being produced overlaps with a weld area (17) which has already been welded, in particular in the manner of fish scales or seams.

4. Method according to any of Claims 1 to 3, **characterized in that** a weld area (20) which is currently being produced overlaps with a weld area that was produced immediately before the last pause interval.

5. Method according to any of Claims 1 to 3, **characterized in that** a weld area (20) which is currently being produced is located at a distance from a weld area (19) which was produced immediately before the last pause interval and is therefore free of overlap with respect to the weld area (19) which was produced immediately before the last pause interval.

6. Method according to any of Claims 1 to 5, **characterized in that** the pulse durations of the multiplicity of welding pulses lie in the range between
• 0.1 ms to 100 ms or
• 0.1 ms to 50 ms or
• 0.1 ms to 20 ms or
• 1 ms to 20 ms or
• 1 ms to 10 ms.

7. Method according to any of Claims 1 to 6, **characterized in that** the pulse durations of the multiplicity of welding pulses are of equal length.

8. Method according to any of Claims 1 to 6, **characterized in that** the pulse durations of the multiplicity of welding pulses have different lengths.

9. Method according to any of Claims 1 to 8, **characterized in that** the power density of the laser beam lies in the range between 10⁴ W/cm² and 10¹⁰ W/cm².

10. Method according to any of Claims 1 to 9, **characterized in that** the power densities of the multiplicity of welding pulses are of equal magnitude.

11. Method according to any of Claims 1 to 9, **characterized in that** the power densities of the multiplicity of welding pulses are of different magnitudes.

12. Method according to any of Claims 1 to 11, **characterized in that** the laser beam has a beam diameter or a beam width lying in the range between 40 µm and 4 mm.

13. Method according to any of Claims 1 to 12, **characterized in that** the beam diameter or the beam width of the laser beam (5) is in each case the same for the multiplicity of welding pulses.

14. Method according to any of Claims 1 to 13, **characterized in that** a laser beam (5) having a circular cross section is used.

15. Method according to any of Claims 1 to 14, **characterized in that** the beam diameter or the beam width of the laser beam (5) varies for individual welding pulses of the multiplicity of welding pulses.

16. Method according to any of Claims 1 to 15, **characterized in that** welding takes place at a repetition rate in the range between 200 Hz and 10 kHz.

17. Method according to any of Claims 1 to 16, **characterized in that** metal components, in particular sheet-metal components, are used as the components.

18. Method according to any of Claims 1 to 16, **characterized in that** plastics components, in particular components made of thermoplastic material, are used as the components.

19. Method according to any of Claims 1 to 18, **characterized in that** at least one of the components is a component which is partially or completely coated with a coating.

20. Method according to Claim 19, **characterized in that** a component with a coating having a melting or evaporation temperature that is lower than the melting or evaporation temperature of the component material on which the coating is applied is used.

21. Method according to any of the preceding claims, **characterized in that** a steel sheet component, in particular a stainless-steel sheet component, or an aluminium component or a component made of an aluminium alloy is used as at least one of the components.

22. Method according to any of the preceding claims, **characterized in that** a galvanized component is used as at least one of the components.

23. Method according to any of the preceding claims, **characterized in that** the first component is a cast component and the second component is a component made of a different material, in particular steel or aluminium, which is welded to the cast component or is welded into the cast component.

24. Method according to any of the preceding claims, **characterized in that** the thickness (s₁) of the first component (1) and/or the thickness (s₂) of the second component (2) lies in a range between 0.3 mm to 5 mm, in particular in a range between 0.3 mm to 3 mm.

25. Method according to any of Claims 1 to 24, **characterized in that** during a welding pulse the power density of the welding pulse is changed by
• changing the laser output while keeping the beam cross section constant, or
• changing the beam cross section while keeping the laser output constant, or
• changing the laser output and the beam cross section.

## Revendications

1. Procédé de soudage de pièces (1, 2) comprenant les étapes suivantes :
• fourniture d'une première pièce (1) et d'une deuxième pièce (2),
• mise en place des deux pièces (1, 2) l'une contre l'autre,
• soudage des deux pièces (1, 2) au moyen d'un faisceau laser (5),
• une fente traversant la première pièce (1) étant réalisée dans la première pièce,
le faisceau laser (5) étant dirigé dans la zone de la fente pendant le soudage,
**caractérisé en ce que**
• au moins l'une des deux pièces (1, 2) est une pièce de carrosserie d'une carrosserie de véhicule à fabriquer,
• une pluralité d'impulsions de soudage sont générées par allumage et extinction répété(e)s du faisceau laser (5), qui sont chaque fois interrompues par des intervalles de pause sans soudage, pendant lesquels le faisceau laser (5) est éteint,
• chaque impulsion de soudage génère une zone de soudage locale (11 - 22) dans laquelle le matériau des deux pièces (1, 2) est fondu et fusionné de manière limitée localement,
• certaines des zones de soudage (11 - 22) générées par les impulsions de soudage se chevauchent,
• le faisceau laser restant stationnaire par rapport aux pièces (1, 2) pendant les différentes impulsions de soudage, de sorte que pendant une impulsion de soudage la zone de soudage respective (11 - 22) est irradiée en permanence par la lumière laser, et
• une zone de soudage (20) actuellement générée, en chevauchement avec une zone de soudage (17) déjà générée, n'étant alors générée que lorsque la zone de soudage (17) déjà générée est déjà solidifiée ou largement solidifiée.

2. Procédé selon la revendication 1, **caractérisé en ce que** certaines des zones de soudage (11 - 22) générées par les impulsions de soudage se chevauchent pour former un cordon de soudure (10) cohérent, étanche aux fluides.

3. Procédé selon l'une des revendications 1 et 2, **caractérisé en ce que** le faisceau laser (5) est positionné de telle sorte qu'une zone de soudage (20) actuellement générée est en chevauchement avec une zone de soudage (17) déjà soudée, notamment à la manière d'écailles ou d'une couture.

4. Procédé selon l'une des revendications 1 à 3, **caractérisé en ce qu'**une zone de soudage (20) actuellement générée est en chevauchement avec une zone de soudage qui a été générée immédiatement avant le dernier intervalle de pause.

5. Procédé selon l'une des revendications 1 à 3, **caractérisé en ce qu'**une zone de soudage (20) actuellement générée est espacée d'une zone de soudage (19) qui a été générée immédiatement avant le dernier intervalle de pause et est donc sans chevauchement par rapport à la zone de soudage (19) générée immédiatement avant le dernier intervalle de pause.

6. Procédé selon l'une des revendications 1 à 5, **caractérisé en ce que** les durées d'impulsions de la pluralité d'impulsions de soudage se situent dans la gamme comprise entre
• 0,1 ms à 100 ms ou
• 0,1 ms à 50 ms ou
• 0,1 ms à 20 ms ou
• 1 ms à 20 ms ou
• 1 ms à 10 ms.

7. Procédé selon l'une des revendications 1 à 6, **caractérisé en ce que** les durées d'impulsions de la pluralité d'impulsions de soudage sont de même longueur.

8. Procédé selon l'une des revendications 1 à 6, **caractérisé en ce que** les durées d'impulsions de la pluralité d'impulsions de soudage sont de longueurs différentes.

9. Procédé selon l'une des revendications 1 à 8, **caractérisé en ce que** la densité de puissance du faisceau laser se situe dans la plage comprise entre 10⁴ watts/cm² et 10¹⁰ watts/cm².

10. Procédé selon l'une des revendications 1 à 9, **caractérisé en ce que** la densité de puissance de la pluralité d'impulsions de soudage est de même grandeur.

11. Procédé selon l'une des revendications 1 à 9, **caractérisé en ce que** la densité de puissance de la pluralité d'impulsions de soudage est de grandeur différente.

12. Procédé selon l'une des revendications 1 à 11, **caractérisé en ce que** le faisceau laser a un diamètre de faisceau ou une largeur de faisceau qui se situe dans la plage comprise entre 40 µm et 4 mm.

13. Procédé selon l'une des revendications 1 à 12, **caractérisé en ce que** le diamètre de faisceau ou la largeur de faisceau du faisceau laser (5) est à chaque fois le même/la même pour la pluralité d'impulsions de soudage.

14. Procédé selon l'une des revendications 1 à 13, **caractérisé en ce qu'**est utilisé un faisceau laser (5) qui présente une section transversale de faisceau circulaire.

15. Procédé selon l'une des revendications 1 à 14, **caractérisé en ce que** le diamètre de faisceau ou la largeur de faisceau du faisceau laser (5) est différent(e) pour les impulsions de soudage individuelles de la pluralité d'impulsions de soudage.

16. Procédé selon l'une des revendications 1 à 15, **caractérisé en ce que** le soudage est effectué à une fréquence de répétition dans une plage comprise entre 200 Hz et 10 kHz.

17. Procédé selon l'une des revendications 1 à 16, **caractérisé en ce que** l'on utilise comme pièces des pièces métalliques, en particulier des pièces en tôle métallique.

18. Procédé selon l'une des revendications 1 à 16, **caractérisé en ce que** l'on utilise comme pièces des pièces en matière plastique, en particulier des pièces en matière synthétique thermoplastique.

19. Procédé selon l'une des revendications 1 à 18, **caractérisé en ce qu'**au moins l'une des pièces est une pièce qui est partiellement ou totalement recouverte d'un revêtement.

20. Procédé selon la revendication 19, **caractérisé en ce qu'**est utilisée une pièce avec un revêtement dont la température de fusion ou de vaporisation est inférieure à la température de fusion ou de vaporisation du matériau de la pièce sur lequel le revêtement est appliqué.

21. Procédé selon l'une des revendications précédentes, **caractérisé en ce que** l'on utilise en tant qu'au moins une des pièces une pièce en tôle d'acier, en particulier une pièce en tôle d'acier inoxydable, ou une pièce en aluminium ou une pièce en un alliage d'aluminium.

22. Procédé selon l'une des revendications précédentes, **caractérisé en ce que** l'on utilise en tant qu'au moins une des pièces une pièce galvanisée.

23. Procédé selon l'une des revendications précédentes, **caractérisé en ce que** la première pièce est une pièce moulée et la deuxième pièce est une pièce en un autre matériau, en particulier acier ou aluminium, qui est soudée à la pièce moulée ou soudée dans la pièce moulée.

24. Procédé selon l'une des revendications précédentes, **caractérisé en ce que** l'épaisseur (s¹) de la première pièce (1) et/ou l'épaisseur (s²) de la deuxième pièce (2) se situe dans une plage comprise entre 0,3 mm et 5 mm, notamment dans une plage comprise entre 0,3 mm et 3 mm.

25. Procédé selon l'une des revendications 1 à 24, **caractérisé en ce que**, pendant une impulsion de soudage, la densité de puissance de l'impulsion de soudage est modifiée par
• modification de la puissance du laser tout en gardant la section transversale du faisceau constante ou
• modification de la section transversale du faisceau alors que la puissance du laser est maintenue constante ou
• modification de la puissance du laser et de la section transversale du faisceau.
